# FASCICULE DE BREVET EUROPEEN

(11) **EP 0 577 514 B1**
(45) Date de publication et mention de la délivrance du brevet: **17.04.1996**
(21) Numéro de dépôt: 93401709.6
(22) Date de dépôt: 01.07.1993
(51) Int. Cl.: G01B 11/12

(54) **Dispositif de mesure très précise du diamètre interne d'un tube sur une grande longueur**
Vorrichtung zum sehr genauen Messen der Innendurchmesser von Rohren über grosse Abstände
Apparatus for the precision measurement of internal tube diameter over a long distance

(30) Priorité: 03.07.1992 FR 9208252
(43) Date de publication de la demande: 05.01.1994
(73) Titulaire: FRANCE TELECOM, F-75015 Paris (FR)
(72) Inventeur: Le Marer, René, F-22730 Tregastel (FR); Grosso, PHilippe, F-22300 Lannion (FR); Perrin, Gabrielle, F-22300 Ploubezre (FR)
(74) Mandataire: Martin, Jean-Jacques

(56) Documents cités:
- EP-A- 0 255 300
- DE-U- 9 114 646
- GB-A- 531 568
- GB-A- 2 072 837
- GB-A- 2 126 730
- US-A- 2 571 161
- PATENT ABSTRACTS OF JAPAN vol. 16, no. 323 (P-1386) 15 Juillet 1992; & JP-A-40 95 807

## Description

La présente invention concerne un dispositif de mesure du diamètre interne d'un corps allongé et plus précisément un dispositif destiné à être introduit et déplacé axialement dans une enveloppe cylindrique allongée suivant un axe D₁ et présentant un diamètre interne, pour mesurer ledit diamètre interne.

L'invention trouve notamment une application particulièrement avantageuse, dans le domaine de la fabrication des fibres optiques, pour mesurer avec une grande précision le diamètre intérieur sur toute la longueur de tubes de silice usinés pour la réalisation de préformes pour fibres optiques. Ces tubes de silice usinés présentent généralement des longueurs assez importantes supérieures ou égales à 1,50 mètres et des diamètres intérieurs d'environ 20 millimètres.

Actuellement, on connaît déjà un dispositif du type palpeur micromètrique interne comprenant trois lames destinées à être introduites dans un tube à mesurer par une de ses extrémités et à être écartées mécaniquement au moyen d'un écarteur introduit également dans le tube de façon que les lames viennent en contact interne avec le tube. Cet écarteur est par ailleurs relié de façon mécanique à un vernier placé à l'extérieur du tube sur lequel on peut lire directement l'écartement desdites lames correspondant au diamètre interne à mesurer.

Ce dispositif présente toutefois un certain nombre d'inconvénients.

Tout d'abord, la longueur utile du tube dans lequel on effectue la mesure à l'aide de ce dispositif, est limitée à la longueur dudit dispositif, cette dernière étant elle-même limitée par la capacité de torsion de l'écarteur permettant de mettre les lames en contact avec la paroi intérieure dudit tube. De ce fait, au moyen d'un tel dispositif, on ne peut pas mesurer le diamètre interne d'un tube très long servant par exemple à la fabrication de préforme pour fibres optiques.

De plus, la valeur du diamètre interne lue sur le vernier n'est jamais très précise. La précision dépend de la personne qui effectue la mesure. De ce fait, la précision moyenne obtenue avec ce palpeur micromètrique est de l'ordre de 5 microns, ce qui peut être insuffisant pour certaines applications.

En outre, on connaît du document FR-A-2 651 312 une autre technique pour mesurer le diamètre interne d'un tube transparent dont les parois internes et externes sont cylindriques et coaxiales, qui consiste à :
- balayer le tube, placé dans l'air, par un faisceau laser incident déplacé parallèlement à lui-même dans un plan de coupe perpendiculaire à l'axe du tube,
- détecter les faisceaux qui en traversant le tube ont subi au moins une réflexion à l'intérieur de la paroi dudit tube de manière à ce qu'ils ressortent du tube non déviés, ces derniers, excepté celui qui passe par l'axe du tube, allant par couple,
- déterminer pour deux de ces couples la distance entre les deux faisceaux de chacun de ces deux couples et au moyen de ces distances, les diamètres intérieur et extérieur du tube.

L'inconvénient majeur de cette technique connue est qu'elle n'est pas applicable pour mesurer le diamètre interne des tubes dépolis par l'usinage et donc non transparents aux faisceaux lumineux.

Afin de pallier aux différents inconvénients de la technique antérieure, l'invention propose un dispositif qui comporte :
- un appareil de mesure,
- une tête de lecture placée en alignement avec l'appareil de mesure et comportant :
   . des éléments contacteurs mobiles radialement par rapport audit axe D₁, lesdits éléments contacteurs présentant une forme essentiellement sphérique et étant constitués par un matériau magnétique,
   . un transmetteur apte à se déplacer suivant ledit axe D₁ par rapport audit appareil de mesure sous l'action d'un moyen élastique positionné entre le transmetteur et l'appareil de mesure, ledit transmetteur présentant un corps de forme extérieure essentiellement conique qui s'appuie sur lesdits éléments contacteurs pour les maintenir en contact avec la paroi intérieure de ladite enveloppe,
   . un moyen de maintien rigide des éléments contacteurs en appui sur ledit transmetteur, à polarisation axiale positionné de façon opposée audit transmetteur, en regard desdits éléments contacteurs,
      et présentant une surface d'appui plane polarisée, perpendiculaire audit axe D₁ servant de surface d'appui auxdits éléments contacteurs, de sorte que tout déplacement radial des éléments contacteurs engendre un déplacement axial du transmetteur mesuré par l'appareil de mesure.

On entend ici par matériau magnétique, un matériau susceptible d'être magnétisé au contact d'un aimant, afin que l'objet constitué par ledit matériau soit attiré par ledit aimant.

Ainsi, en déplaçant à l'intérieur de ladite enveloppe, par exemple un tube, le dispositif selon l'invention, on peut mesurer de façon très précise le diamètre interne dudit tube sur toute sa longueur. Au fur et à mesure que l'ensemble du dispositif est déplacé dans le tube à mesurer et tant que le diamètre interne du tube reste constant, le transmetteur se maintient à une distance constante de l'appareil de mesure destiné à mesurer les déplacements axiaux dudit transmetteur. Lorsque le diamètre du tube varie, les éléments contacteurs en contact avec la paroi interne du tube, se déplacent symétriquement radialement par rapport à l'axe D₁ ce qui provoque un déplacement axial du transmetteur. En mesurant ce déplacement axial du transmetteur, on en déduit celui desdits éléments contacteurs qui correspond à la variation de rayon interne du tube. Il convient de préciser qu'avantageusement les éléments contacteurs sont maintenus par le moyen de maintien rigide, tel qu'un aimant, et ceux-ci ne peuvent pas se déplacer axialement. Par contre, le transmetteur maintenu en appui par le moyen élastique sur lesdits éléments contacteurs ne peut lui se déplacer radialement, son seul mouvement est axial.

Selon un mode de réalisation préféré du dispositif selon l'invention, le transmetteur est un trièdre régulier comprenant une base et trois plans inclinés deux à deux d'un angle de 90 degrés, ledit trièdre étant placé de telle sorte que sa base est positionnée en regard dudit appareil de mesure, ledit moyen élastique étant positionné entre la base du trièdre et ledit appareil de mesure.

Ainsi, les éléments contacteurs de forme sphérique sont maintenus entre l'aimant, la paroi interne de l'enveloppe et les plans du trièdre. Lors d'une variation du diamètre interne du tube, chacun des éléments contacteurs se déplace suivant un axe radial perpendiculaire audit axe D₁ et présentant un décalage angulaire de 45 degrés par rapport au plan d'appui correspondant du trièdre. De ce fait, avantageusement le déplacement axial du transmetteur est égal au déplacement radial des éléments contacteurs et en mesurant le déplacement du transmetteur on obtient directement la variation du rayon interne du tube.

En outre, selon un mode de réalisation de l'invention, lesdits éléments contacteurs sont des billes en acier calibrées.

D'autre part, l'appareil de mesure dudit dispositif présentant un diamètre externe inférieur au diamètre interne de l'élément à mesurer, pour des raisons de commodité de déplacement axial du dispositif à l'intérieur dudit élément, il y a avantage à ce que selon l'invention ledit dispositif comporte des guides écarteurs placés latéralement sur ledit appareil de mesure, entre la paroi intérieure de l'enveloppe et ledit appareil de mesure.

Ainsi, ces guides écarteurs glissent sur la paroi interne dudit élément et permettent de centrer l'appareil de mesure sur l'axe D₁ de l'élément et par là-même de centrer la tête de lecture.

Avantageusement, selon l'invention, la tête de lecture est fixée, de préférence vissée, de manière interchangeable sur ledit appareil de mesure et présente des dimensions correspondantes au diamètre interne à mesurer.

En effet, selon l'invention, il est prévu un appareil de mesure standard sur lequel on peut fixer différentes têtes de lecture correspondant chacune à un diamètre interne d'une enveloppe différente à mesurer.

Selon un mode de réalisation préféré de l'invention, l'appareil de mesure est un interféromètre apte à envoyer et à capter des faisceaux optiques suivant ledit axe D₁, et le transmetteur comporte un réflecteur apte à réfléchir coaxialement à un faisceau optique incident qu'il reçoit, un faisceau optique réfléchi.

Ainsi, tant que le diamètre interne du tube à mesurer reste constant, le transmetteur se maintenant à une distance constante de l'interféromètre, les faisceaux incident et réfléchi par ledit réflecteur parcourent alors un chemin constant et se superposent dans l'interféromètre en créant des franges d'interférence immobiles. Lorsque le diamètre du tube varie, les éléments contacteurs se déplacent radialement provoquant un déplacement axial du transmetteur et de ce fait, le chemin des faisceaux incident et réfléchi par ledit réflecteur associé varie et on observe alors un déplacement des franges d'interférence. Le déplacement des franges d'interférence étant proportionnel au déplacement axial du réflecteur, en mesurant ce déplacement desdites franges, on peut en déduire le chemin parcouru suivant l'axe D₁ par le réflecteur. On déduit à partir du déplacement du réflecteur celui desdits éléments contacteurs qui correspond à la variation du rayon interne du tube.

On peut envisager que le réflecteur soit un miroir placé sur la base du trièdre formant le transmetteur, de telle sorte que ledit miroir soit strictement perpendiculaire au faisceau émis par l'interféromètre.

En outre, de préférence selon l'invention, le transmetteur est un réflecteur constitué par un trièdre régulier en verre comportant une base et trois plans inclinés deux à deux de 90 degrés.

Suivant un autre mode de réalisation de l'invention, l'appareil de mesure est un capteur capacitif comportant un élément mobile relié au transmetteur.

L'élément mobile est apte à se déplacer axialement avec le transmetteur et son mouvement provoque une variation par exemple de la surface ou bien du milieu diélectrique d'un élément capacitif à l'intérieur dudit capteur, ce qui entraîne une variation de capacité. Cette variation de capacité est enregistrée par le capteur. Ainsi, lorsque le transmetteur se déplace axialement, l'élément mobile se déplace simultanément et le déplacement du transmetteur peut être déduit de la variation de capacité induite dans le capteur et enregistrée par ce dernier.

D'autres aspects et avantages de la présente invention apparaîtront mieux à la lecture de la description détaillée suivante, d'une forme de réalisation préférée de celle-ci, donnée à titre d'exemple et faite en référence aux dessins annexés sur lesquels :
- la figure 1 est un schéma en coupe d'un mode de réalisation du dispositif selon l'invention mis en place dans une enveloppe cylindrique à mesurer.
- La figure 2 est une vue latérale du réflecteur du dispositif de la figure 1.
- La figure 3 est une vue suivant l'axe D du réflecteur de la figure 2.

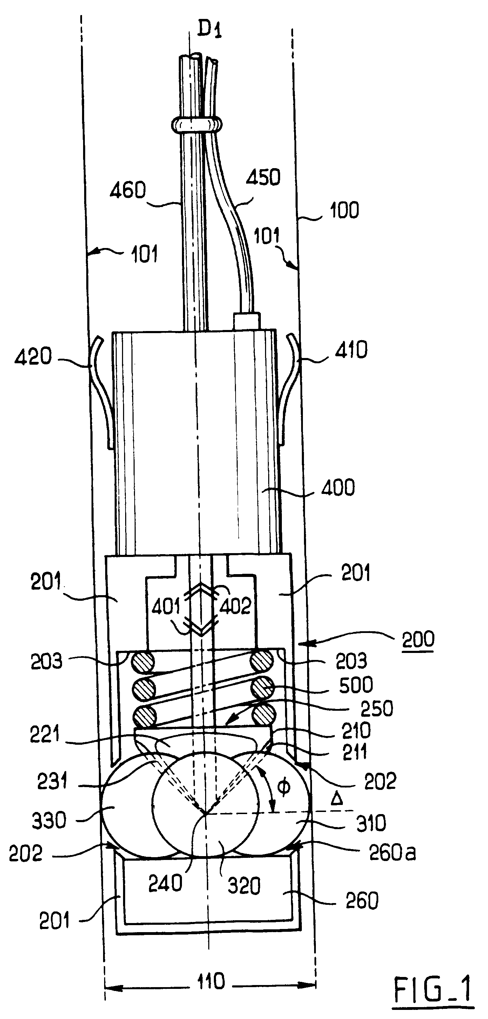

Sur la figure 1, on a représenté un mode de réalisation du dispositif selon l'invention. Ce dispositif est destiné à être introduit et déplacé axialement au moyen d'un câble flexible de traction 460, dans une enveloppe cylindrique de révolution 100, allongée suivant un axe D₁ et présentant un diamètre intérieur 110 afin de mesurer avec une grande précision ledit diamètre interne 110 sur toute la longueur de ladite enveloppe 100.

Cette enveloppe cylindrique de révolution 100 est par exemple un tube de silice usiné pour la réalisation d'une préforme destinée à la fabrication de fibre optique, présentant une grosse capacité et une grande précision mécanique. Dans un exemple typique un tel tube présente une longueur d'environ 1,50 mètres et un diamètre intérieur d'environ 20 millimètres.

Comme on peut le voir sur la figure 1, le dispositif comporte un appareil de mesure tel qu'un interféromètre 400 raccordé à l'une de ses extrémités au câble flexible de traction 460. Cet interféromètre 400 du type optique est apte à envoyer un faisceau optique incident 401 suivant l'axe D₁, et à capter un faisceau optique réfléchi 402 suivant l'axe D₁. Les faisceaux optiques incident et réfléchi présentant un déphasage se superposent à l'intérieur de l'interféromètre qui est apte à mesurer la position des franges d'interférence résultantes de cette superposition.

En outre, le dispositif comprend une tête de lecture 200 placée en alignement avec ledit interféromètre 400 et plus précisément fixée de manière interchangeable à l'extrémité non raccordée dudit interféromètre 400. La tête de lecture 200 comporte une cage d'armature 201 de forme cylindrique, ici vissée par une de ses extrémités sur l'interféromètre, à l'intérieur de laquelle sont positionnés un transmetteur 210 qui est un réflecteur, ici constitué par un trièdre de verre plein présentant une base 250 et trois plans réflecteurs 211,221,231 inclinés deux à deux d'un angle de 90 degrés, et des éléments contacteurs, ici trois billes 310,320,330 en acier calibrées.

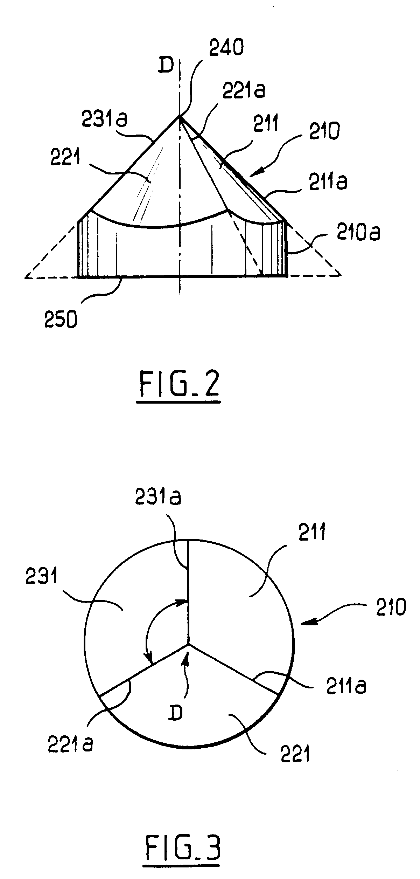

Comme le montrent mieux les figures 2 et 3, le trièdre réflecteur 210 constituant ledit transmetteur peut être formé à partir d'un coin de cube plein en verre (représenté en pointillés sur la figure 2), dont on a poli les faces extérieures des trois plans réflecteurs 211,221,231 à 90 degrés et dont on a tronqué la base pour des raisons de gain de place, afin de former un pied cylindrique 210a présentant une base plane 250 polie également. Sur la figure 2, on distingue également la diagonale principale du cube passant par le sommet 240 du trièdre 210. Le trièdre plein 210 est un trièdre régulier, c'est-à-dire, que vu suivant la diagonale D, il présente des arêtes 211a,221a,231a décalées entre-elles de 120 degrés.

Il convient de préciser qu'on peut envisager d'utiliser comme transmetteur un trièdre creux ouvert au niveau de sa base. Dans ce cas il faut polir les trois faces intérieures à 90 degrés dudit trièdre creux ou bien recouvrir lesdites faces intérieures d'une couche de matériau réfléchissant pour former les trois plans réflecteurs.

Bien entendu, on peut envisager également un autre mode de réalisation du transmetteur selon lequel ce dernier est creux et présente la forme interne d'un trièdre avec trois faces internes à 90 degrés réfléchissantes et une forme externe conique de révolution.

Comme le montre la figure 1, ledit trièdre 210 est placé entre l'interféromètre 400 et les billes 310,320,330 de telle sorte que sa base 250 est positionnée en regard de l'interféromètre 400, essentiellement perpendiculairement à l'axe D₁, ledit axe D₁ étant confondu avec la diagonale D, et que chacun des trois plans réflecteurs 211,221,231 soit au contact d'une bille 310,320,330, elle-même au contact de la paroi intérieure 101 de l'enveloppe 100. Il convient de noter que la cage d'armature 201 comporte trois fenêtres 202 disposées de manière équidistante l'une de l'autre tout autour d'une section de ladite cage cylindrique, chacune des billes 310,320,330 faisant saillie à l'extérieur de ladite cage 201 au travers d'une des fenêtre 202 pour venir au contact de ladite paroi interne 201. Par ailleurs, la tête de lecture 200 comporte un moyen élastique 500, ici un ressort, positionné entre la base 250 du trièdre 210 et un épaulement 203 de la cage d'armature 201 placé à proximité de l'interféromètre 400.
Ce ressort 500 maintient le trièdre 210 en appui contre lesdites billes 310,320,330. De plus, un moyen de maintien rigide tel qu'un aimant 260 à polarisation axiale logé à l'autre extrémité fermée de la cage d'armature 201 présente une face plane 260a formant par exemple le pôle Nord dudit aimant, perpendiculaire à l'axe D₁, en regard desdites billes 310,320,330 pour servir d'appui à celles-ci. Ledit aimant 260 permet de maintenir les billes 310,320,330 dans un plan perpendiculaire à l'axe D₁ en les retenant sur sa surface d'appui 260a qui s'étend sur toute la section de ladite cage 201. Les billes 310,320,330 sont alors maintenues entre l'aimant 260, la paroi interne 101 de l'enveloppe 100 et les plans 211,221,231 du trièdre 210.

D'autre part, le dispositif de la figure 1, comprend au moins trois guides écarteurs 410,420, dont deux seulement sont représentés, placés sur l'interféromètre 400, entre ce dernier et la paroi intérieure 101 de l'enveloppe 100 de manière à centrer l'interféromètre dans ladite enveloppe lorsque l'ensemble du dispositif est tracté à l'intérieur de ladite enveloppe.

Nous allons maintenant décrire le fonctionnement du dispositif représenté sur la figure 1.

Pour mesurer très précisément le diamètre intérieur de l'enveloppe 100 sur toute sa longueur, on introduit axialement le dispositif de la figure 1 à l'intérieur de ladite enveloppe 100, et on tracte ledit dispositif sur toute ladite longueur. Alors que l'on tire par le câble flexible de traction 460 l'interféromètre 400, celui-ci envoie un faisceau incident 401 sur ledit trièdre 210. Ce faisceau incident 401 pénètre dans ledit trièdre 210 plein par sa base 250 polie, et subit trois réfléxions sur les trois plans réflecteurs 211,221,231 dudit trièdre 210, puis émerge du trièdre coaxialement à lui-même. Le faisceau réfléchi 402 est capté par l'interféromètre 400 qui est relié par un cordon 450 à un visualiseur, non représenté, sur lequel on peut visualiser la position des franges d'interférence entre le faisceau incident 401 et le faisceau réfléchi 402, au cours de l'avancement du dispositif dans ladite enveloppe. Tant que le diamètre interne 110 de l'enveloppe 100 reste contant, l'ensemble constitué par le trièdre 210 et les billes 310,320,330 reste immobile par rapport à l'interféromètre 400 et la distance parcourue par les faisceaux entre l'interféromètre et ledit trièdre est constante. De ce fait les franges d'interférence entre les faisceaux optiques incidents et les faisceaux optiques réfléchis sont immobiles. Par contre, lorsque le diamètre interne 110 varie, chacune des billes 310,320,330 en contact avec la paroi intérieure 101 de l'enveloppe 100, se déplace suivant un axe Δ radial par rapport à D₁, présentant un décalage Φ angulaire de 45 degrés par rapport au plan du trièdre correspondant. Ce déplacement radial desdites billes provoque un déplacement axial du trièdre 210 par rapport à l'interféromètre. Il convient de préciser que, lesdites billes 310,320,330 maintenues par l'aimant 260 ne peuvent en aucun cas se déplacer axialement. Par contre le trièdre 210 maintenu en appui par le ressort 500 sur lesdites billes ne peut lui se déplacer radialement, son seul mouvement est axial. Ainsi, par exemple lorsque le diamètre interne 110 se rétrécit lesdites billes se déplacent radialement en direction de l'axe D₁ et provoquent le déplacement axial dudit trièdre en direction de l'interféromètre. D'autre part, lorsque le diamètre intérieur 110 augmente les billes se déplacent radialement en direction de la paroi intérieure 101, et le trièdre 210 se déplace alors axialement en éloignement dudit interféromètre sous l'action du ressort 500. Lorsque le trièdre 210 se déplace, le chemin parcouru par les faisceaux optiques varie, et on observe sur le visualiseur un déplacement des franges d'interférence entre le faisceau incident et le faisceau réfléchi. Le comptage du nombre de franges d'interférence en défilement permet alors de déterminer le chemin parcouru par ledit faisceau lumineux et donc le déplacement axial dudit trièdre. On peut montrer par un calcul géométrique simple que le déplacement du trièdre sur l'axe D₁ est alors directement égal au déplacement radial de chacune des billes suivant ledit axe Δ à 45 degrés par rapport au plan réflecteur correspondant du trièdre. De cette manière, on en déduit facilement la variation du rayon interne de ladite enveloppe sur toute sa longueur, puis la variation de son diamètre.

Il est intéressant de noter qu'on obtient la valeur du diamètre interne d'une enveloppe cylindrique avec une précision d'environ 0,2 micromètre ce qui est remarquable, cette précision étant environ 25 fois plus faible que celle de la technique antérieure.

Bien entendu, la présente invention n'est nullement limitée à la forme de réalisation décrite et représentée.

Par exemple, selon une variante de l'invention, l'appareil de mesure est un capteur capacitif comprenant un élément mobile axialement, relié audit transmetteur, le mouvement axial dudit élément mobile provoquant une variation de capacité dans ledit capteur capacitif. Cette variation de capacité permet alors de mesurer le déplacement du transmetteur.

En outre, suivant cette variante, on peut envisager que le transmetteur présente une forme conique de révolution.

## Revendications

1. Dispositif destiné à être introduit et déplacé axialement dans une enveloppe cylindrique (100), allongée suivant un axe D₁ et présentant un diamètre interne (110), pour mesurer ledit diamètre interne (110), caractérisé en ce qu'il comporte :
- un appareil de mesure (400),
- une tête de lecture (200) placée en alignement avec l'appareil de mesure (400) et comportant :
. des éléments contacteurs (310,320,330) mobiles radialement par rapport audit axe D₁, lesdits éléments contacteurs (310,320,330) présentant une forme essentiellement sphérique et étant constitués par un matériau magnétique,
. un transmetteur (210) apte à se déplacer suivant ledit axe D₁ par rapport audit appareil de mesure (400) sous l'action d'un moyen élastique (500) positionné entre le transmetteur (210) et l'appareil de mesure (400), ledit transmetteur (210) présentant un corps de forme extérieure essentiellement conique qui s'appuie sur lesdits éléments contacteurs pour les maintenir en contact avec la paroi intérieure (101) de ladite enveloppe (100),
. un moyen de maintien rigide (260) des éléments contacteurs en appui sur ledit transmetteur, à polarisation axiale positionné de façon opposée audit transmetteur (210), en regard desdits éléments contacteurs (310,320,330), et présentant une surface d'appui plane polarisée (260a), perpendiculaire audit axe D₁ servant de surface d'appui auxdits éléments contacteurs (310,320,330),
de sorte que tout déplacement radial des éléments contacteurs (310,320,330) engendre un déplacement axial du transmetteur (210) mesuré par l'appareil de mesure (400).

2. Dispositif selon la revendication 1, caractérisé en ce que le transmetteur est un trièdre régulier (210) comprenant une base (250) et trois plans (211,221,231) inclinés deux à deux de 90 degrés, ledit trièdre étant placé de telle sorte que sa base (250) est positionnée en regard dudit appareil de mesure (400), ledit moyen élastique (500) étant positionné entre la base (250) du trièdre (210) et ledit appareil de mesure (400).

3. Dispositif selon l'une des revendications 1 ou 2, caractérisé en ce que lesdits éléments contacteurs sont des billes (310,320,330) en acier calibrées.

4. Dispositif selon l'une des revendications 2 ou 3, caractérisé en ce que lesdits éléments contacteurs comprennent trois billes (310,320,330), chacune desdites billes (310,320,330) étant en appui sur un plan (211,221, 231) dudit trièdre (210).

5. Dispositif selon l'une des revendications 1 à 4, caractérisé en ce qu'il comporte des guides écarteurs (410,420) placés entre la paroi intérieure (101) de l'enveloppe (100) et ledit appareil de mesure (400).

6. Dispositif selon l'une des revendications 1 à 5, caractérisé en ce que la tête de lecture (200) est fixée, de préférence vissée, de manière interchangeable sur ledit appareil de mesure (400) et est adaptée au diamètre interne à mesurer.

7. Dispositif selon l'une des revendications 1 à 6, caractérisé en ce que l'appareil de mesure est in interféromètre (400) apte à envoyer et à capter des faisceaux optiques (401,402) suivant ledit axe D₁, et le transmetteur comporte un réflecteur (210) apte à réfléchir coaxialement à un faisceau optique incident (401) qu'il reçoit, un faisceau optique réfléchi (402).

8. Dispositif selon la revendication 7, caractérisé en ce que le transmetteur est un réf lecteur constitué par un trièdre régulier en verre comportant une base (250) et trois plans (211,221,231) inclinés deux à deux de 90 degrés.

9. Dispositif selon l'une des revendications 1 à 6, caractérisé en ce que l'appareil de mesure est un capteur capacitif comportant un élément mobile relié au transmetteur.

## Claims

1. A device designed to be inserted in a cylindrical envelope (100) that is elongate along an axis D₁ and that has an inside diameter (110), and to be displaced axially therealong for the purpose of measuring said inside diameter (110), the device being characterized in that it comprises:
a measurement apparatus (400);
a read head (200) placed in alignment with the measurement apparatus and itself comprising:
contactor elements (310, 320, 330) that are radially movable relative to said axis D₁, said contactor elements (310, 320, 330) being essentially spherical in shape and being made of a magnetic material;
a transmitter (210) suitable for moving along said axis D₁ relative to said measurement apparatus (400) under drive from resilient means (500) positioned between the transmitter (210) and the measurement apparatus (400), said transmitter (210) having a body whose outside shape is generally conical and which bears against said contactor elements so as to hold them in contact with the inside wall (101) of said envelope (100); and
axially polarized rigid holding means (260) for holding the contactor elements bearing against said transmitter, the holding means being positioned on the opposite side of said contactor elements (310, 320, 330) relative to said transmitter (210) and having a polarized plane bearing surface (260a) perpendicular to said axis D₁ and serving as a bearing surface for said contactor elements (310, 320, 330);
whereby any radial displacement of the contactor elements (310, 320, 330) gives rise to an axial displacement of the transmitter (210) which is measured by the measurement apparatus (400).

2. A device according to claim 1, characterized in that the transmitter is a regular trihedron (210) comprising a base (250) and three planes (211, 221, 231) that are inclined at 90° in pairs, said trihedron being placed so that its base (250) faces said measurement apparatus (400), said resilient means (500) being positioned between the base (250) of the trihedron (210) and said measurement apparatus (400).

3. A device according to claim 1 or 2, characterized in that said contactor elements are calibrated steel balls (310, 320, 330).

4. A device according to claim 2 or 3, characterized in that the contactor elements comprise three balls (310, 320, 330) with each of said balls (310, 320, 330) bearing against one of the planes (211, 221, 231) of said trihedron (210).

5. A device according to any one of claims 1 to 4, characterized in that it includes spreader guides (410, 420) placed between the inside wall (101) of the envelope (100) and said measurement apparatus (400).

6. A device according to any one of claims 1 to 5, characterized in that the read head (200) is fixed, preferably screwed, in interchangeable manner on said measurement apparatus (400) and is matched to the inside diameter to be measured.

7. A device according to any one of claims 1 to 6, characterized in that the measurement apparatus is an interferometer (400) suitable for delivering and receiving light beams (401, 402) along said axis D₁, and the transmitter includes a reflector (210) suitable for reflecting an incident light beam (401) that it receives in the form of a return light beam (402).

8. A device according to claim 7, characterized in that the transmitter is a reflector constituted by a rectangular glass trihedron comprising a base (250) and three planes (211, 221, 231) that are inclined at 90° to one another in pairs.

9. A device according to any one of claims 1 to 6, characterized in that the measurement apparatus is a capacitive sensor including a moving element connected to the transmitter.

## Patentansprüche

1. Vorrichtung zum Messen des Innendurchmessers (110) eines zylindrischen Mantels (100), welche in den zylindrischen Mantel eingeführt und in diesem axial verschoben wird, wobei sich der Mantel längs einer Achse D₁ erstreckt und den Innendurchmesser (110) hat, **gekennzeichnet** durch:
eine Meßeinrichtung (400),
einen Lesekopf (200), der mit der Meßeinrichtung (400) fluchtet und folgende Merkmale aufweist:
- relativ zu der Achse D₁ radial bewegliche Kontaktelemente (310, 320, 330), wobei die Kontaktelemente (310, 320, 330) im wesentlichen kugelförmig sind und aus einem magnetischen Werkstoff bestehen,
- einen Meßwertgeber (210), der sich unter Einwirkung eines elastischen Mittels (500), welches zwischen dem Meßwertgeber (210) und der Meßeinrichtung (400) angeordnet ist, relativ zu der Meßeinrichtung (400) längs der Achse D₁ bewegen kann, wobei der Meßwertgeber (210) einen Körper mit einer im wesentlichen konischen äußeren Form darstellt, der sich auf die Kontaktelemente stützt, um diese in Kontakt mit der Innenwand (101) des Mantels (100) zu halten,
- Mittel zum starren Halten (260) der Kontaktelemente abgestützt gegen den Meßwertgeber, welche axial polarisiert sind, dem Meßwertgeber (210) gegenüberliegen und zu den Kontaktelementen (310, 320, 330) weisen und eine plane, polarisierte Stützfläche (260a) aufweisen, die senkrecht zu der Achse D₁ ist und als eine Stützfläche für die Kontaktelemente (310, 320, 330) dient,
so daß die gesamte radiale Verschiebung der Kontaktelemente (310, 320, 330) eine axiale Verschiebung des Meßwertgebers (210) erzeugt, welche von der Meßeinrichtung (400) gemessen wird.

2. Vorrichtung nach Anspruch 1, dadurch **gekennzeichnet**, daß der Meßwertgeber ein gleichmäßiges Trieder (210) mit einer Grundfläche (250) und drei Flächen (211, 221, 231) ist, von denen jeweils zwei mit einem Winkel von 90° gegeneinander geneigt sind, wobei das Trieder derart angeordnet ist, daß seine Grundfläche (250) zu der Meßeinrichtung (400) weist, und wobei die elastischen Mittel (500) zwischen der Grundfläche (250) des Trieders (210) und der Meßeinrichtung (400) angeordnet sind.

3. Vorrichtung nach einem der Ansprüche 1 oder 2, dadurch **gekennzeichnet**, daß die Kontaktelemente geeichte Kugeln (310, 320, 330) aus Stahl sind.

4. Vorrichtung nach einem der Ansprüche 2 oder 3, dadurch **gekennzeichnet**, daß die Kontaktelemente drei Kugeln (310, 320, 330) umfassen und jede dieser Kugeln (310, 320, 330) sich gegen eine Fläche (211, 221, 231) des Trieders (210) abstützt.

5. Vorrichtung nach einem der Ansprüche 1 bis 4, dadurch **gekennzeichnet**, daß sie Spreizführungen (410, 420) aufweist, die zwischen der Innenwand (101) des Mantels (100) und der Meßeinrichtung (400) angeordnet sind.

6. Vorrichtung nach einem der Ansprüche 1 bis 5, dadurch **gekennzeichnet**, daß der Lesekopf (200) vorzugsweise mit Schrauben derart befestigt ist, daß er auf der Meßeinrichtung (400) austauschbar und an den zu messenden Innendurchmesser anpaßbar ist.

7. Vorrichtung nach einem der Ansprüche 1 bis 6, dadurch **gekennzeichnet**, daß die Meßeinrichtung ein Interferometer (400) ist, welches Lichtstrahlen (401, 402) längs der Achse D₁ senden und empfangen kann, und der Meßwertgeber einen Reflektor (210) aufweist, welcher einen reflektierten Lichstrahl (402) koaxial zu einem einfallenden Lichtstrahl (401), welchen er empfängt, reflektieren kann.

8. Vorrichtung nach Anspruch 7, dadurch **gekennzeichnet**, daß der Meßwertgeber ein Reflektor ist, welcher aus einem gleichmäßigen Glastrieder gebildet wird, das eine Grundfläche (250) und drei Flächen (211, 221, 231) aufweist, von denen jeweils zwei mit einem Winkel von 90° gegeneinander geneigt sind.

9. Vorrichtung nach einem der Ansprüche 1 bis 6, dadurch **gekennzeichnet**, daß die Meßeinrichtung ein kapazitiver Meßfühler ist, der ein mit dem Meßwertgeber verbundenes bewegliches Element aufweist.
